# EUROPEAN PATENT SPECIFICATION

(11) **EP 0 617 100 B1**
(45) Date of publication and mention of the grant of the patent: **05.08.1998**
(21) Application number: 94301952.1
(22) Date of filing: 18.03.1994
(51) Int. Cl.: C09J 4/06

(54) **Alpha- cyanoacrylate adhesive compositions and method of production thereof**
Klebemittelzusammensetzungen auf Alpha-cyanoakrylat Basis und Verfahren zu deren Herstellung
Compositions adhésives à base d'alphacyanoacrylate et procédé pour leur fabrication

(30) Priority: 23.03.1993 JP 86976/93
(43) Date of publication of application: 28.09.1994
(73) Proprietor: THREE BOND CO., LTD., Hachioji-shi Tokyo (JP)
(72) Inventor: Ohsawa, Nobuo, Hachioji-shi, Tokyo (JP)
(74) Representative: Watkins, David

(56) References cited:
- WO-A-86/01276
- FR-A- 2 358 454
- FR-A- 2 358 455

## Description

This invention relates to α-cyanoacrylate adhesive compositions having excellent properties such as high peel strength, impact resistance, heat resistance, moisture resistance, and thermal shock resistance, and a method for production of the α-cyanoacrylate adhesive compositions by dispersing refractory elastomer particles such as acrylonitrile-butadiene copolymer in α-cyanoacrylate adhesive.

Cyanoacrylate is a compound expressed by the following general formula. (In the formula, R represents components having carbon number of 16 or less such as alkyl, alkenyl, aralkyl, alkoxy alkyl, haloalkyl, cyclohexyl, allyl, and phenyl.)

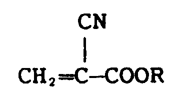

When this compound is applied to a surface of metal, rubber, plastic, glass and wood, it quickly hardens by taking place polymerization reaction with a little moisture on the surface. The compound of this type has an excellent adhesive property and has been widely used as rapid-setting adhesive.

The α-cyanoacrylate adhesive shows high adhesive strength under shear; nevertheless, it suffers from the defect that it becomes brittle when hardened. Thus, the hardened α-cyanoacrylate adhesive is insufficient in resistance against peeling stress and impact and durability (heat resistance, water resistance, moisture resistance, and thermal shock resistance).

Japanese Patent Application Public Disclosure No. SHO 57-78469(A) discloses a method for improving the properties of α-cyanoacrylate adhesive such as resistance against peeling stress and impact by adding pyrogallol to α-cyanoacrylate in the range of 1 to 5000 ppm. Though the prior art method makes it possible to improve the adhesive strength and impact resistance of the adhesive resultantly obtained, the hardened adhesive entails a problem such as insufficiency of heat resistance, water resistance and moisture resistance, and therefore, it is restricted in use.

United States Patent 4,105,715 discloses a cyanoacrylate adhesive composition in thixotropic paste form made by mixing a liquid cyanoacrylate ester with powdered organic fillers selected from (i) polycarbonates, (ii) polyvinylidene fluorides, (iii) polyethylenes, and (iv) acrylic block copolymers containing saturated elastomer segments. The filler is added in proportions of 2.5 to 50% by weight for the purpose of thickening the basic cyanoacrylate to improve its handling characteristics.

Similarly, International Patent Application No WO 86/01276 discloses a thixotropic gel composition comprising an α-cyano acrylate in admixture with, among other things, a filler in the form of fibres, spheres or mixtures thereof. The filler is substantially insoluble in the α-cyanoacrylate monomer and is responsible for the thixotropic character of the composition.

There has been so far known another method for improving brittleness of hardened α-cyanoacrylate adhesive to alleviate stress in the adhesive interface by dissolving elastomer in α-cyanoacrylate. For instance, Japanese Patent Publication No. SHO 43-29477(B) proposes the method for improvement of the properties of α-cyanoacrylate adhesive by mixing α-cyanoacrylate with elastomer such as acrylonitrile-butadiene copolymer. However, the adhesive produced by this prior art method is disadvantageously insufficient in adhesive strength and compatibility so as not to improve brittleness.

The inventor of this invention has studied to solve the aforenoted problem on the conventional α-cyanoacrylate adhesive of this type and, as a result of his study, could find a method capable of producing α-cyanoacrylate adhesive compositions being remarkably excellent in' adhesive strength, impact resistance, peel strength, heat resistance, moisture resistance, and thermal shock resistance, and further free from the problem as to brittleness after hardened. The highly functional α-cyanoacrylate adhesive by dispersing refractory elastomer particles in α-cyanoacrylate adhesive. Thus, the inventor has accomplished this invention.

The α-cyanoacrylate adhesive used in this invention is obtained by adding a radical polymerization inhibitor for ensuring storage stability, and an anionic polymerization inhibitor such as hydroquinone, catechol, phosphoric acid, methanesulfonic acid, p-toluenesulfonic acid and sultoneboron trifluoride etherate to α-cyanoacrylate adhesive, as a primary component which is expressed by the general formula as specified above.

In a first aspect, the invention is an α-cyanoacrylate adhesive composition comprising an α-cyanoacrylate adhesive having dispersed therethrough elastomer particles of size in the range 0.1 to 100 µm, characterised in that said elastomer particles are selected from one or more of acrylonitrile-butadiene copolymer, styrene-butadiene copolymer or crude rubber.

Acrylonitrile-butadiene copolymer is the preferred elastomer in this invention.

In the α-cyanoacrylate adhesive composition according to the present invention, the elastomer particles are dispersed. The reason why a dispersal system is used in this invention is that excessive elastomer particles can be added in the dispersal system thereby to obtain an elastomeric composition of α-cyanoacrylate adhesive without increasing its viscosity.

On the other hand, in the dissolution system as noted above, α-cyanoacrylate adhesive and elastomer are soluble in each other and thereby produce an elastic composition of α-cyano acrylate adhesive with high viscosity.

In a second aspect, the invention is a method of preparing an adhesive composition in accordance with the first aspect by the steps of:
(a) adding to an α-cyanoacrylate adhesive an excess of elastomer particles selected from one or more of acrylonitrile-butadiene copolymer, styrene-butadiene copolymer or crude rubber, said elastomer particles having a solubility of 10% or less in α-cyanoacrylate at 30°C or below;
(b) heating the mixture obtained in step (a) at 100°C or below to dissolve the elastomer particles;
(c) rapidly cooling the solution to 20°C to 30°C to educe elastomer particles in the size range 0.1 to 100 µm, and
(d) dispersing said educed elastomer particles through said α-cyanoacrylate adhesive.

Alternatively, the method may be executed by dissolving the elastomer particles in a non-polar solvent prior to mixing with the α-cyanoacrylate adhesive. Particles are educed in the desired particle size range by removing the non-polar solvent by vacuum deaeration.

If elastomer particles with particle sizes of below 0.1 µm are used, α-cyanoacrylate adhesive compositions having sufficient adhesive strength cannot be obtained. The α-cyanoacrylate adhesive composition obtained by using elastomer particles with particle sizes of above 100 µm is inferior in storage stability and, particularly, entails conspicuous thickening of the composition due to aggregation occurring between the particles of elastomer.

The method of dispersing the refractory elastomer particles in α-cyanoacrylate adhesive is carried out by, for example, mixing the elastomer previously dissolved in an adequate non-polar solvent with α-cyanoacrylate adhesive, stirring three components until being mixed uniformly, and then, subjecting the mixture thus obtained to vacuum-deaeration for removing the non-polar solvent so as to supersaturate and educe the elastomer particles with a particle size of 0.1 to 100 µm in the mixture. Thus, the refractory elastomer particles are dispersed in the α-cyanoacrylate adhesive.

Embodiments of the present invention will be described hereinafter.

### Embodiments 1 to 5 = Comparative Examples 1 to 2:

100 parts by weight of α-cyanoacrylate adhesive "Three Bond 1741" [made by the applicant's company and composed of 99.9% (by weight) of cyanoacrylate ethyl ester and a polymerization inhibitor such as of 0.01% (by weight) of hydroquinone and 0.001% (by weight) of trifluoroboron ethyl etherate] (hereinafter, referred to as "TB1741") was mixed with 6 to 20 parts by weight of acrylonitrilebutadiene copolymer [which is composed of 40% of combined acrylonitrile, has Mooney viscosity of 60 to 70 (ML (100°C)}, and is supersaturated in 100 parts by weight of TB1741 at 25°C when using 5 parts by weight of the copolymer] (hereinafter, referred to as "NBR-1"). Then, the mixture thus obtained was stirred at 90°C to 100°C in order to dissolve the constituents uniformly.

When the constituents were dissolved uniformly, the mixture is cooled in such a manner that a temperature is reduced by 10°C per hour, thereby to educe NBR-1 in the form of particles. Then, the educed NBR-1 particles were efficiently stirred at a high speed with an agitator. The stirring was continued for several hours after the temperature is lowered to about 15°C so as to disperse the NBR-1 particles in the adhesive, consequently to obtain an experimental sample. The sample thus obtained was tested by the following manner. The result of the test are shown in Table 1 below.

As comparative samples, the aforesaid TB1741 alone, and a mixture of 100 parts by weight of TB1741 and 1 to 5 parts by weight of NBR-1 which were dissolved at room temperature were used. The state of the particles dispersed in the adhesive was confirmed by use of a phase contrast microscope, and the measure of the resultant adhesive was evaluated from the particle diameter thereof.

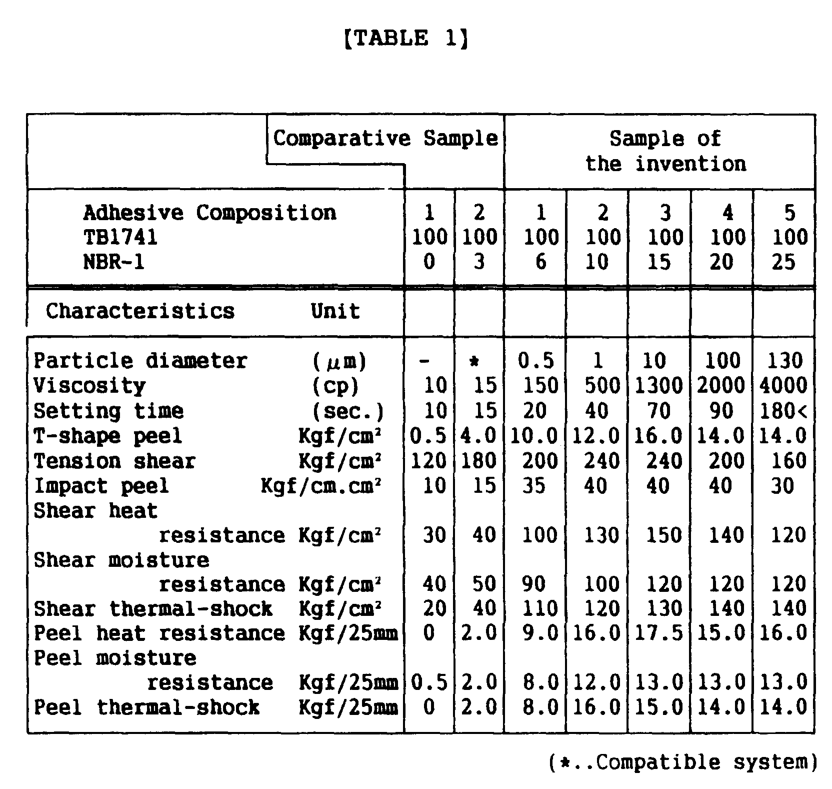

### Methods of the tests:

1. (a) The viscosity of the adhesive under 15 cPs (15 mPa.s) was measured at 25±5°C by use of a capillary viscometer (JIS K6861). (b) The test on setting time was carried out in such a manner that the lower portion of a steel test piece "A" was bonded to the upper portion of a steel test piece "B" with the respective adhesive samples described above, and tensile load was applied to the test piece "B" with a weight of 5 kg hung from the lower portion of the test piece "B" to measure the lapse of time after setting (JIS K6861). (c) The test on tensile bonding strength was carried out in such a manner that a tensile force was applied to the aforesaid test pieces bonded to each other with the respective adhesive samples in the longitudinal direction so as to measure the maximum load when the bonding portion of the test pieces is broken (JIS K6861).
2. The test on T-shape peeling adhesive strength of the adhesive was carried out in such a manner that a T-shaped test piece formed by attacing two L-shaped steel pieces to each other with the respective adhesive samples described above was used, and a tensile force applied to the T-shaped test piece for breaking the bonding portion of the test piece was measured (JIS K6854).
3. The test on impact-peeling adhesive strength was carried out in such a manner that a test piece formed by' bonding two steel pieces to each other with the respective adhesive samples described above was fixed on a jig, and a prescribed impact load was applied to the test piece to measure the impact adhesive strength (JIS K6855).
4. The tests on heat resistance, moisture resistance and thermal shock resistance of the adhesive were carried out by use of a steel test piece. The conditions under which the tests are as follows:

Heat Resistance ... A heat run test was conducted in such a manner that the hardened adhesive was permitted to stand for 24 hours at 120°C, and then, cooled down to room temperature for measurement.

Moisture Resistance ... A humidity test was made in such a manner that the hardened adhesive was permitted to stand-for 7 days at 60°C at 95% relative humidity, and then, cooled down to room temperature for measurement.

Thermal Shock Resistance ... A thermal shock test was conducted in such a manner that a thermal shock caused by changing the condition from 120°C for one hour to -40°C for one hour was administered to the hardened adhesive twenty times, and then, the hardened adhesive was cooled down to room temperature for measurement.

### Embodiments 6 to 10:

The minimum quantity of 6 to 20 parts by weight of NBR-1 was dissolved in a non-polar solvent and stirred until being mixed uniformly. Next, 100 parts by weight of TB1741 was added thereto and well stirred until three components were mixed uniformly in the mixture. The uniformly stirred mixture is subjected to vacuum-deaeration for removing the non-polar solvent and further stirred at high speed so as to disperse particles of NBR-1 resultantly educed in the mixture. Thus, an experimental sample of the invention was obtained and tested in the' same manner as above. The experimental results are shown in Table 2 below. The comparative samples 1 and 2 specified above should be referred to.

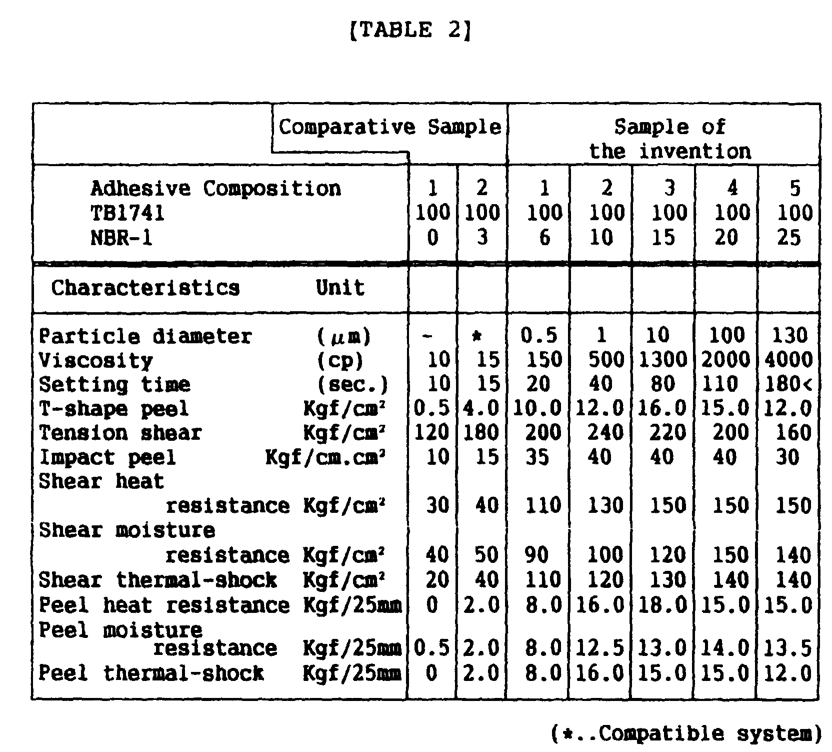

### Embodiments 11 and 12:

For these embodiments, the experimental samples were obtained by using acrylonitrile-butadiene copolymers different from that used in Embodiment 1 noted above. To be more specific, as the acrylonitrile-butadiene copolymer, elastomer particles of 1 µm in particle size, being low in Mooney viscosity and high in solubility at a normal temperature, were dispersed in adhesive composition. The tests for evaluating the properties of the adhesive composition were carried out by the same method as above. The results of the tests are shown in Table 3 below.

**[TABLE 3]**

| | Sample of the invention | | |
|---|---|---|---|
| Composition | 7 | 11 | 12 |
| TB1741 | 100 | 100 | 100 |
| Saturated solubility at room temperature (%) | 5 | 10 | 15 |
| NBR-1 | 10 | | |
| NBR-2 | | 25 | |
| NBR-3 | | | 35 |
| Characteristics Unit | | | |
| Mooney viscosity ML (100°C) | | | |
| Particle diameter (µm) | 1 | 1 | 1 |
| Viscosity (cp) | 500 | 500 | 500 |
| Setting time (sec.) | 40 | 180 | 300< |
| T-shape peel Kgf/cm² | 12.0 | 8.0 | 8.0 |
| Tension shear Kgf/cm² | 240 | 180 | 120 |
| Impact peel Kgf/cm.cm² | 40 | 30 | 25 |

### (Consideration)

The experimental samples used in Embodiments 1 to 10 were made by the different methods. However, the respective properties of the samples can be regarded to be substantially the same, taking account of differences in constituents of the adhesive samples.

Compared with the conventional adhesive in which acrylonitrile-butadiene copolymer is dissolved (compatible system), the adhesive of this invention in which particles of acrylonitrile-butadiene copolymer are dispersed (dispersal system) is remarkably improved in its durable adhesive properties.

When using acrylonitrile-butadiene copolymer being low in Mooney viscosity and solubility as the dispersal system, the adhesive entails disadvantages such that the setting time thereof becomes longer thus losing its rapid-setting ability and storage stability is degraded.

As is seen from the foregoing, the present invention can provide highly functional adhesive compositions being improved in brittleness after hardened, having higher adhesive strength, impact resistance and peel strength in comparison with compatible type adhesive compositions, and showing remarkably excellent durability (heat resistance, water resistance, moisture resistance, and thermal shock resistance) by dispersing refractory elastomer particles in α-cyanoacrylate adhesive.

## Claims

1. An α-cyanoacrylate adhesive composition comprising an α-cyanoacrylate adhesive having dispersed therethrough elastomer particles of size in the range 0.1 to 100 µm, characterised in that said elastomer particles are selected from one or more of acrylonitrile-butadiene copolymer, styrene-butadiene copolymer or crude rubber.

2. A method for producing an α-cyanoacrylate adhesive composition characterised by the steps of:
(a) adding to an α-cyanoacrylate adhesive an excess of elastomer particles selected from one or more of acrylonitrile-butadiene copolymer, styrene-butadiene copolymer or crude rubber, said elastomer particles having a solubility of 10% or less in α-cyanoacrylate at 30°C or below;
(b) heating the mixture obtained in step (a) at 100°C or below to dissolve the elastomer particles;
(c) rapidly cooling the solution to 20°C to 30°C to educe elastomer particles in the size range 0.1 to 100 µm, and
(d) dispersing said educed elastomer particles through said α-cyanoacrylate adhesive.

3. A method as for producing an α-cyanoacrylate adhesive composition characterised by the steps of:
(a) dissolving elastomer particles selected from one or more of acrylonitrile-butadiene copolymer, styrene-butadiene copolymer or crude rubber in a non-polar solvent to obtain an elastomer solution;
(b) mixing said elastomer solution with α-cyanoacrylate adhesive to obtain a mixture;
(c) subjecting said mixture to vacuum deaeration for removing said non-polar solvent, thereby educing elastomer particles in the size range 0.1 to 100 µm, and
(d) dispersing said educed elastomer particles through said α-cyanoacrylate adhesive.

## Patentansprüche

1. Alpha-cyanoakrylat-Klebemittelzusammensetzung, bestehend aus einem Alpha-cyanoakrylat-Klebemittel mit eindispergierten Elastomerteilchen mit einer Teilchengröße im Bereich von 0,1 bis 100 µm, dadurch gekennzeichnet, daß es sich bei den besagten Elastomerteilchen um Teilchen aus Akrylonitril-Butadien-Kopolymer, Styrol-Butadien-Kopolymer oder Rohgummi oder Mischungen von Teilchen einzelner oder aller dieser Elastomere handeln kann.

2. Verfahren zur Herstellung einer Alpha-cyanoakrylat-Klebemittelzusammensetzung, dadurch gekennzeichnet, daß
(a) einem Alpha-cyanoakrylat-Klebemittel ein Überschuß von aus Akrylonitril-Butadien-Kopolymer, Styrol-Butadien-Kopolymer oder Rohgummi bestehenden Elastomerteilchen oder Mischungen derselben zugesetzt wird, wobei besagte Elastomerteilchen bei 30°C und darunter eine Löslichkeit in Alpha-cyanoakrylat von 10% oder weniger aufweisen;
(b) die nach (a) erhaltene Mischung zur Lösung der Elastomerteilchen auf 100°C oder eine niedrigere Temperatur erwärmt wird;
(c) die Lösung zur Ausbildung von Elastomerteilchen mit einer Teilchengröße von 0,1 bis 100 µm schnell auf 20°C oder 30°C abgekühlt wird, und daß
(d) besagte gebildete Elastomerteilchen in dem besagten Alpha-cyanoakrylat-Klebemittel dispergiert werden.

3. Verfahren zur Herstellung einer Alpha-cyanoakrylat-Klebemittelzusammensetzung, dadurch gekennzeichnet, daß
(a) aus Akrylonitril-Butadien-Kopolymer, Styrol-Butadien-Kopolymer oder Rohgummi bestehende Elastomerteilchen oder Mischungen derselben zur Herstellung einer Elastomerlösung in einem unpolaren Lösungsmittel gelöst werden;
(b) die so erhaltene Elastomerlösung zur Herstellung einer Mischung mit Alpha-cyanoakrylat-Klebemittel gemischt wird;
(c) die besagte Mischung zur Entfernung des besagten unpolaren Lösungsmittels mit Luftunterdruck abgesaugt wird, wobei sich Elastomerteilchen im Teilchengrößenbereich von 0,1 bis 100 µm bilden, und daß
(d) die besagten entstandenen Elastomerteilchen in der besagten Alpha-cyanoakrylat-Klebemasse dispergiert werden.

## Revendications

1. Composition adhésive à base d'alpha-cyanoacrylate, comprenant un adhésif à base d'alpha-cyanoacrylate, ayant dispersé en lui des particules élastomères d'une grandeur dans le domaine allant de 0,1 à 100 microns, caractérisée en ce que lesdites particules élastomères sont sélectionnées parmi un ou plusieurs des éléments copolymère d'acrylonitrile-butadiène, copolymère de styrène-butadiène ou caoutchouc brut.

2. Méthode de production d'une composition adhésive à base d'alpha-cyanoacrylate, caractérisée par les étapes
(a) d'addition, à l'adhésif à base d'alpha-cyanoacrylate, d'un excédent de particules polymères sélectionnées parmi un ou plusieurs des éléments copolymère d'acrylonitrile-butadiène, copolymère de styrène-butadiène ou caoutchouc brut, lesdites particules élastomères ayant une solubilité de 10% ou moins dans l'alpha-cyanoacrylate à 30°C ou en-dessous;
(b) de chauffage du mélange obtenu dans l'étape (a) à 100°C ou en-dessous, pour dissoudre les particules élastomères;
(c) de refroidissement rapide de la solution à une température de 20°C à 30°C pour former des particules élastomères dans le domaine de grandeur de 0,1 à 100 microns, et
(d) de dispersion desdites particules élastomères obtenues à travers ledit adhésif à base d'alpha-cyanoacrylate.

3. Méthode de production d'une composition adhésive à base d'alpha-cyanoacrylate, caractérisée par les étapes
(a) de dissolution de particules élastomères sélectionnées parmi un ou plusieurs des éléments copolymère d'acrylonitrile-butadiène, copolymère de styrène-butadiène ou caoutchouc brut dans un solvant non polaire pour obtenir une solution élastomère;
(b) de mélange de ladite solution élastomère à un adhésif à base d'alpha-cyanoacrylate pour obtenir un mélange;
(c) de soumission dudit mélange à un dégazage sous vide pour l'élimination dudit solvant non polaire, en obtenant de ce fait des particules élastomères dans le domaine de grandeur de 0,1 à 100 microns, et
(d) de dispersion desdites particules élastomères obtenues à travers ledit adhésif à base d'alpha-cyanoacrylate.
